# EUROPEAN PATENT APPLICATION

(11) **EP 4 641 443 A1**
(43) Date of publication of application: **29.10.2025**
(21) Application number: 22968849.4
(22) Date of filing: 20.12.2022
(51) Int. Cl.: G06N 3/04

(54) **WIRELESS COMMUNICATION METHODS, TERMINAL DEVICES AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Aldridge, Henry Alexander
(86) International application number: PCT/CN2022/140348
(87) International publication number: WO 2024/130546

(57) **Abstract**

A wireless communication method, a terminal device, and a network device are provided. The method includes the following. A terminal device performs joint training on a first model and a second model according to first input information and label channel data. The first input information is channel data obtained by receiving a reference signal by the terminal device based on first configuration information. The label channel data is channel data obtained by receiving the reference signal by the terminal device based on second configuration information. A resource density of the reference signal configured by the first configuration information is less than a resource density of the reference signal configured by the second configuration information. The first model is used for channel estimation based on the first input information to obtain first output information. The second model is used to compress and recover second input information to obtain target CSI. The second input information is determined according to the first output information.

## Description

### TECHNICAL FIELD

Embodiments of the disclosure relate to the field of communication, and in particular, to a wireless communication method, a terminal device, and a network device.

### BACKGROUND

Signal transmission performance in multiple-input multiple-output (MIMO) technology greatly depends on the accuracy of channel state information (CSI) feedback.

In the related art, a terminal device can perform channel estimation based on a received pilot signal, and further perform CSI feedback based on estimated channel information. Therefore, both CSI estimation performance and CSI feedback performance may affect final signal transmission performance. How to perform CSI estimation and feedback to improve the signal transmission performance is an urgent problem to be solved.

### SUMMARY

A wireless communication method, a terminal device, and a network device are provided in the disclosure. The terminal device or the network device can perform joint training on a channel state information (CSI) estimation model and a CSI feedback model, so that both channel estimation performance and CSI feedback performance can be taken into consideration, thereby improving signal transmission performance.

In a first aspect, a wireless communication method is provided. The method includes the following. A terminal device performs joint training on a first model and a second model according to first input information and label channel data. The first input information is channel data obtained by receiving a reference signal by the terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In a second aspect, a wireless communication method is provided. The method includes the following. A network device transmits first configuration information and second configuration information to a terminal device. A time-domain resource density of a reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information.

In a third aspect, a wireless communication method is provided. The method includes the following. A network device performs joint training on a first model and a second model according to first input information and label channel data. The first input information is channel data obtained by receiving a reference signal by a terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In a fourth aspect, a wireless communication method is provided. The method includes the following. A terminal device transmits first input information and label channel data to a network device. The first input information and the label channel data are used for joint training on a first model and a second model. The first input information is channel data obtained by receiving a reference signal by the terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In a fifth aspect, a terminal device is provided. The terminal device is configured to perform the method in the first aspect, the fourth aspect, or implementations thereof.

Specifically, the terminal device includes functional modules for performing the method in the first aspect, the fourth aspect, or implementations thereof.

In a sixth aspect, a network device is provided. The network device is configured to perform the method in the second aspect, the third aspect, or implementations thereof.

Specifically, the network device includes functional modules for performing the method in the second aspect, the third aspect, or implementations thereof.

In a seventh aspect, a terminal device is provided. The terminal device includes a processor and a memory. The memory is configured to store a computer program. The processor is configured to invoke and execute the computer program stored in the memory, to perform the method in the first aspect, the fourth aspect, or implementations thereof.

In an eighth aspect, a network device is provided. The network device includes a processor and a memory. The memory is configured to store a computer program. The processor is configured to invoke and execute the computer program stored in the memory, to perform the method in the second aspect, the third aspect, or implementations thereof.

In a ninth aspect, a chip is provided. The chip is configured to implement the method in any one of the first aspect to the fourth aspect or implementations thereof. Specifically, the chip includes a processor. The processor is configured to invoke and execute a computer program stored in a memory, to cause a device equipped with the chip to perform the method in any one of the first aspect to the fourth aspect or implementations thereof.

In a tenth aspect, a computer-readable storage medium is provided. The computer-readable storage medium is configured to store a computer program which causes a computer to perform the method in any one of the first aspect to the fourth aspect or implementations thereof.

In an eleventh aspect, a computer program product is provided. The computer program product includes computer program instructions which cause a computer to perform the method in any one of the first aspect to the fourth aspect or implementations thereof.

In a twelfth aspect, a computer program is provided. The computer program, when executed by a computer, causes the computer to perform the method in any one of the first aspect to the fourth aspect or implementations thereof.

With the above technical solution, the terminal device or the network device can perform joint training on the CSI estimation model and the CSI feedback model, so that better adaptation between a channel estimation model and the CSI feedback model can be ensured, thereby improving the overall model performance. Further, CSI feedback based on trained models can improve the CSI feedback performance, thereby improving the signal transmission performance.

### BRIEF DESCRIPTION OF THE DRAWINGS

FIG. 1 is a schematic diagram of an application scenario provided in embodiments of the disclosure.
FIG. 2 is a schematic diagram of a channel state information (CSI) feedback method in the related art.
FIG. 3 is a schematic diagram illustrating CSI feedback based on a conventional CSI acquisition scheme.
FIG. 4 is a schematic diagram illustrating CSI feedback based on an artificial intelligence (AI)-based CSI acquisition scheme.
FIG. 5 is a schematic diagram of a wireless communication method provided in embodiments of the disclosure.
FIG. 6 is a schematic interaction diagram of a wireless communication method provided in an embodiment of the disclosure.
FIG. 7 is another schematic diagram of a wireless communication method provided in embodiments of the disclosure.
FIG. 8 is a schematic interaction diagram of a wireless communication method provided in an embodiment of the disclosure.
FIG. 9 is a schematic block diagram of a terminal device according to embodiments of the disclosure.
FIG. 10 is a schematic block diagram of a network device according to embodiments of the disclosure.
FIG. 11 is another schematic block diagram of a terminal device according to embodiments of the disclosure.
FIG. 12 is another schematic block diagram of a network device according to embodiments of the disclosure.
FIG. 13 is a schematic block diagram of a communication device provided in another embodiment of the disclosure.
FIG. 14 is a schematic block diagram of a chip provided in embodiments of the disclosure.
FIG. 15 is a schematic block diagram of a communication system provided in embodiments of the disclosure.

### DETAILED DESCRIPTION

The following will describe technical solutions of embodiments of the disclosure with reference to the accompanying drawings in embodiments of the disclosure. Apparently, embodiments described herein are some embodiments, rather than all embodiments, of the disclosure. Based on the embodiments of the disclosure, all other embodiments obtained by those of ordinary skill in the art without creative effort shall fall within the protection scope of the disclosure.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, or the like. Embodiments of the disclosure can also be applied to these communication systems.

Optionally, a communication system in embodiments of the disclosure may be applied to a carrier aggregation (CA) scenario, a dual connectivity (DC) scenario, or a standalone (SA) network deployment scenario.

Optionally, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a node B (NB) in WCDMA, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

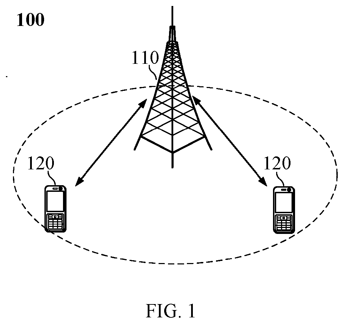

Exemplarily, FIG. 1 illustrates a communication system 100 to which embodiments of the disclosure are applied. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may include multiple network devices, and there can be other quantities of terminal devices in a coverage area of each of the network devices. Embodiments of the disclosure are not limited in this regard.

Optionally, the communication system 100 may further include other network entities such as a network controller, a mobility management entity, or the like, and embodiments of the disclosure are not limited in this regard.

It may be understood that in embodiments of the disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be repeated herein. The communication device may further include other devices such as a network controller, a mobility management entity, or other network entities in the communication system 100, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

In embodiments of the disclosure, the "pre-defined" can be implemented by presaving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

For better understanding of the technical solutions of embodiments of the disclosure, a channel state information (CSI) acquisition procedure in a wireless communication system will be described.

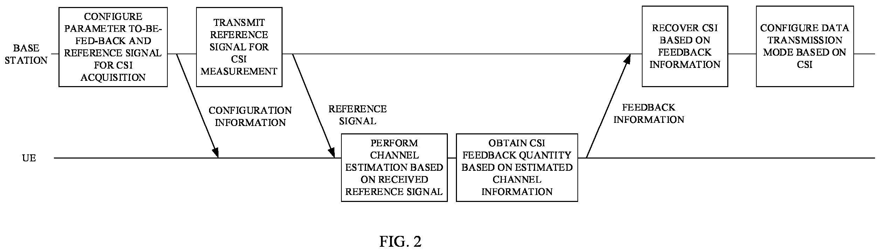

Multiple-input multiple-output (MIMO) technology plays a very important role in LTE and NR systems, and will continue to be one of key technologies in the next-generation wireless communication system in the future. Signal transmission performance in MIMO greatly depends on the accuracy of CSI feedback. Specifically, as illustrated in FIG. 2, a base station first configures related parameter information for CSI feedback, for example, specific information (for example, a rank indication (RI), a precoding matrix indicator (PMI), a channel quality indicator (CQI)) that needs to be fed back by a UE, and a corresponding feedback period. In addition, the base station configures and transmits a reference signal for CSI measurement of the UE, for example, a synchronization signal block (SSB) or a channel state information reference signal (CSI-RS). Through measurement on the above reference signal, the UE first performs channel estimation, and then calculates current CSI according to an estimated channel and feeds back the current CSI to the base station, so that the base station configures a reasonable and efficient data transmission mode based on the current channel condition.

For better understanding of the technical solutions of embodiments of the disclosure, an artificial intelligence (AI)-based CSI feedback method will be described.

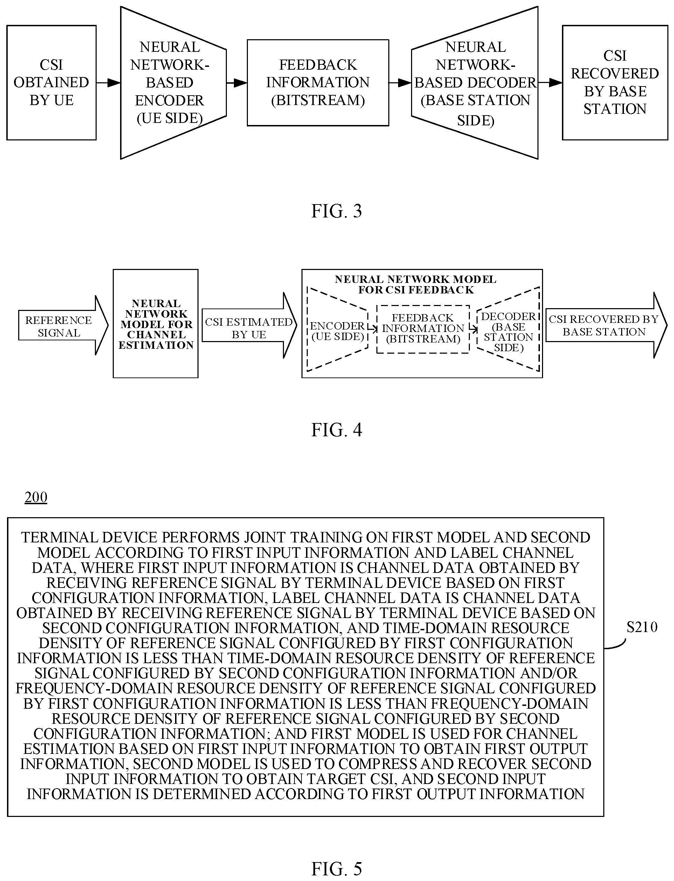

In some scenarios, AI technology is taken into consideration to realize CSI feedback with high accuracy. FIG. 3 is an architectural diagram illustrating AI-based CSI feedback. A UE can convert, with a pre-trained encoder neural network, obtained CSI information into indication information (for example, a bitstream) that can be fed back on an uplink channel. After receiving the indication information, a base station can recover the indication information to CSI information with a corresponding trained decoder neural network. The closer the CSI recovered by the base station is to the CSI obtained by the UE, the better the performance of a neural network model is.

For better understanding of the technical solutions of embodiments of the disclosure, an AI-based channel estimation method will be described.

A basic objective of channel estimation is to estimate to obtain as complete and accurate channel information as possible based on a received pilot signal. Based on the performance of a neural network model, the neural network model is adopted for channel estimation. Specifically, a received reference signal is input into a trained neural network model, and the model can output estimated complete channel information.

A conventional CSI acquisition scheme is mainly based on theoretical modeling and parameter selection for an actual communication environment. With the further enhancement of requirements for flexibility, self-adaptability, system capacity, etc., of the wireless communication system, the gain that can be brought by a conventional design and optimization mode of the wireless communication system based on the classical mathematical model theory is gradually weakening.

An AI-based CSI acquisition scheme takes advantage of powerful capabilities such as non-linear fitting, compression, and recovery of a neural network, and therefore has higher feedback accuracy and lower feedback overhead compared with the conventional CSI acquisition scheme.

However, both the conventional CSI acquisition scheme and the AI-based CSI acquisition scheme follow a modular system design approach. Specifically, a complete CSI acquisition procedure is broken down into several relatively independent modules, including a channel estimation module and a CSI feedback module, which are separately designed and optimized. In the modular approach, a complex problem can be broken down into several relatively simple sub-problems which will be separately solved, thereby reducing the system design and optimization difficulty. However, the modular breaking-down may also bring limitations to the system design, and thus limits the overall system performance. Taking the AI-based CSI acquisition scheme as an example, two different neural networks need to be separately designed and trained to complete channel estimation and CSI feedback, as illustrated in FIG. 4. A task of a neural network for channel estimation is to estimate channel information as accurately and completely as possible, but the neural network for channel estimation cannot take into consideration the actual compression capability of a subsequent neural network for CSI feedback. The neural network for CSI feedback is designed and trained to compress and recover CSI information, but cannot be accurately adapted to the previous neural network for channel estimation. For example, in an actual communication environment, since a channel estimation error may change significantly due to a fluctuation of a signal-to-noise ratio (SNR), and the neural network for CSI feedback cannot be adapted to or even compensate for such an error, degradation and instability in the system performance will finally occur, and thus the final signal transmission performance is affected.

Therefore, how to perform CSI estimation and feedback to improve the signal transmission performance is an urgent problem to be solved.

In view of this, embodiments of the disclosure provide a solution in which joint training can be performed on a channel estimation model and a CSI feedback model, so that the trained channel estimation model and CSI feedback model can adapt to each other, and thus the system performance can be improved. Further, the network device can determine an appropriate signal transmission mode based on CSI information fed back from the trained models, and thus the signal transmission performance can be improved.

For better understanding of the technical solutions of embodiments of the disclosure, the technical solutions of embodiments of the disclosure will be elaborated below. The related art below, as an optional scheme, can be arbitrarily combined with the technical solutions of embodiments of the disclosure, which shall all belong to the protection scope of embodiments of the disclosure. Embodiments of the disclosure include at least part of the following.

FIG. 5 is a schematic diagram of a wireless communication method 200 according to embodiments of the disclosure. As illustrated in FIG. 5, the method 200 includes the following.

S210, a terminal device performs joint training on a first model and a second model according to first input information and label channel data.

It may be understood that in embodiment of the disclosure, performing joint training on the first model and the second model may mean performing initial training on the first model and the second model, or may mean updating the trained first model and second model. For example, when a scenario changes, joint training is performed on the first model and the second model based on channel data in the changed scenario, to update the first model and the second model.

In some embodiments, the first model is used for channel estimation based on the first input information to obtain first output information, the second model is used to compress and recover second input information to obtain target CSI, and the second input information is determined according to the first output information.

In embodiments of the disclosure, the first model is also referred to as a channel estimation model, and the second model is also referred to as a CSI feedback model.

In some embodiments, the second input information is determined according to the first input information as follows. The second input information is the first input information. Alternatively, the second input information is obtained through processing of the first input information.

In some embodiments, the first input information is channel data obtained by receiving a reference signal by the terminal device based on first configuration information, and the label channel data is channel data obtained by receiving the reference signal by the terminal device based on second configuration information.

In some embodiments, the second configuration information is used to obtain more complete and accurate channel data as label data for joint training.

In some embodiments, a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information.

That is, a resource density of the reference signal configured by configuration information for joint training is greater than a resource density of the reference signal configured by configuration information for CSI acquisition. Therefore, more complete and more accurate channel data can be obtained by receiving the reference signal based on the configuration information for joint training. Further, by taking the channel data as the label data for joint training, it is conducive to ensuring that more complete and more accurate CSI can be fed back from models that are subject to joint training.

In some embodiments, the second model includes an encoder model and a decoder model. The encoder model is used to compress the second input information to obtain a target bitstream, and the decoder model is used to recover the target bitstream to obtain the target CSI.

In some embodiments, the first model and the encoder model in the second model are deployed at a terminal device side, and the decoder model in the second model is deployed at a network device side.

In some embodiments, the method 200 further includes the following. The terminal device obtains the first model and the second model.

It may be noted that, a manner for obtaining the first model and the second model by the terminal device is not limited in the disclosure. Optionally, the first model and the second model may be obtained in the same manner, or may be obtained in different manners. The encoder model and the decoder model in the second model may be obtained in the same manner, or may be obtained in different manners.

In some embodiments, the first model is obtained from a network device, for example, configured by the network device through downlink signaling. For example, the downlink signaling may include, but is not limited to, a system message, a radio resource control (RRC) message, a media access control control-element (MAC CE), and downlink control information (DCI).

In some embodiments, the first model is pre-defined, for example, by a device manufacturer.

In some embodiments, the first model is obtained from a third-party device, for example, through a third-party channel or protocol.

In some embodiments, the second model is pre-defined, for example, by a device manufacturer.

In some embodiments, the second model is obtained from a third-party device, for example, through a third-party channel or protocol.

In some embodiments, the second model is obtained from a network device, for example, configured by the network device through downlink signaling. For example, the downlink signaling may include, but is not limited to, a system message, an RRC message, an MAC CE, and DCI.

In some embodiments of the disclosure, joint training on the first model and the second model by the terminal device may be determined by the terminal device itself.

For example, the terminal device can determine, according to whether one or more monitoring indicators satisfy a preset condition, whether to trigger joint training on the first model and the second model.

In some specific embodiments, the method 200 further includes the following. The terminal device determines, according to first information, whether to perform joint training on the first model and the second model. The first information includes at least one of: channel quality information of an environment where the terminal device is located; a data transmission status in a recent period of time; CSI feedback performance of the second model; or mobility information of the terminal device.

A change in a channel environment may directly affect the accuracy of channel estimation, and due to influences brought by error propagation, the CSI feedback performance may also be affected. Therefore, through monitoring of a channel quality indicator, when the channel environment changes, joint training can be performed on the first model and the second model, which is conducive to ensuring that a model for CSI feedback is applicable to a current channel environment.

In some embodiments, the channel quality information of the environment where the terminal device is located may include, but is not limited to, at least one of the following channel quality indicators: reference signal receiving power (RSRP), reference signal receiving quality (RSRQ), signal to interference plus noise ratio (SINR), SNR, or received signal strength indication (RSSI).

For example, when a variation of the channel quality indicator is greater than a first threshold, the terminal device can determine to trigger joint training on the first model and the second model.

Optionally, the first threshold may be pre-defined or configured by the network device, for example, configured through at least one of a system message, an RRC message, an MAC CE, or DCI.

A data transmission status can reflect whether a data transmission mode selected by the network device is appropriate, and the data transmission mode selected by the network device is determined according to CSI fed back by the terminal device. Therefore, the data transmission status can reflect CSI feedback performance of the terminal device. When the data transmission status deteriorates, it indicates that the CSI feedback performance of the terminal device also deteriorates. In this case, the terminal device can trigger joint training on the first model and the second model, and further perform CSI feedback based on trained models, so that it can be ensured that an appropriate data transmission mode is selected, thereby improving the data transmission performance.

In some embodiments, the data transmission status in the recent period of time includes a success rate of data packet reception in the recent period of time, such as a block error rate (BLER), a bit error rate (BER), etc.

In some specific embodiments, when the success rate of data packet reception in the recent period of time is lower than a second threshold, the terminal device can trigger joint training on the first model and the second model.

Optionally, the second threshold may be pre-defined or configured by the network device, for example, configured through at least one of a system message, an RRC message, an MAC CE, or DCI.

The CSI feedback performance of the second model may affect the data transmission performance. When the CSI feedback performance of the second model deteriorates, joint training on the first model and the second model is triggered, and CSI feedback is further performed based on trained models, so that the CSI feedback performance can be ensured. Further, the network device can select an appropriate data transmission mode based on the fedback CSI, thereby improving the data transmission performance.

In some embodiments, the CSI feedback performance of the second model includes, but is not limited to: a similarity, a cosine similarity, a square of the cosine similarity, a mean square error, and a normalized mean square error between input information and output information of the second model.

In some embodiments, the mobility information of the terminal device may include, but is not limited to, a movement speed of the terminal device, a relative position relationship, and distance information between the terminal device and the network device, etc. During the rapid movement of the terminal device relative to the network device, both the difficulty and error in the channel estimation may increase due to the Doppler effect, thereby affecting the CSI feedback performance. When the distance or the relative position relationship between the terminal device and the network device changes, a channel environment between the terminal device and the network device may change, thereby affecting the CSI feedback performance. Therefore, determining, according to the mobility information of the terminal device, whether to trigger joint training on the first model and the second model is conducive to ensuring that the terminal device updates the models in time to ensure the CSI feedback performance of the models.

Optionally, the movement speed of the terminal device can be determined based on sensor information on the terminal device.

In some embodiments, when the movement speed of the terminal device is greater than a third threshold, joint training on the first model and the second model is triggered.

Optionally, the third threshold may be pre-defined or configured by the network device, for example, configured through at least one of a system message, an RRC message, an MAC CE, or DCI.

In some other embodiments of the disclosure, joint training on the first model and the second model by the terminal device may be triggered by the network device. For example, the terminal device receives first indication information from the network device, where the first indication information indicates the terminal device to perform joint training on the first model and the second model.

As an example, the first indication information is transmitted through, but not limited to, at least one of the following signaling: DCI, an RRC message, or an MAC CE.

In some embodiments, the network device can determine, according to whether one or more monitoring indicators satisfy a preset condition, whether to trigger joint training on the first model and the second model.

For example, the network device determines, according to third information, whether joint training will be performed on the first model and the second model. The third information includes at least one of: channel quality information of an environment where the network device is located; or a data transmission status in a recent period of time.

A change in a channel environment may directly affect the accuracy of channel estimation, and due to influences brought by error propagation, the CSI feedback performance may also be affected. Therefore, through monitoring of a channel quality indicator, when the channel environment changes, joint training can be performed on the first model and the second model, which is conducive to ensuring that a model for CSI feedback is applicable to a current channel environment.

For example, when a variation of the channel quality indicator is greater than a fourth threshold, the network device can determine to trigger joint training on the first model and the second model.

Optionally, the fourth threshold may be pre-defined or determined by the network device.

A data transmission status can reflect whether a data transmission mode selected by the network device is appropriate, and the data transmission mode selected by the network device is determined according to CSI fed back by the terminal device. Therefore, the data transmission status can reflect CSI feedback performance of the terminal device. When the data transmission status deteriorates, it indicates that the CSI feedback performance of the terminal device also deteriorates. In this case, joint training on the first model and the second model can be triggered. Further, the terminal device performs CSI feedback based on trained models, so that it can be ensured that an appropriate data transmission mode is selected by the network device, thereby improving the data transmission performance.

In some embodiments, the data transmission status in the recent period of time includes a hybrid automatic repeat reQuest (HARQ) state of the terminal device, for example, the number (quantity) and frequency of HARQ retransmissions initiated by the terminal device. The number and frequency of HARQ retransmissions initiated by the terminal device reflect a success rate of data reception at the terminal device side to a certain extent.

For example, when the number of HARQ retransmissions of the terminal device is greater than a fifth threshold, the network device can determine to trigger joint training on the first model and the second model.

Optionally, the fifth threshold may be pre-defined or determined by the network device.

In some embodiments, the second configuration information is transmitted by the network device in the case where the network device determines to trigger joint training on the first model and the second model.

Optionally, the first indication information and the second configuration information may be transmitted through the same signaling, or may be transmitted through different signaling, which is not limited in the disclosure.

For example, in the case where the network device determines to trigger the terminal device to perform joint training on the first model and the second model, the network device indicates the second configuration information to the terminal device, so that the terminal device obtains the label channel data for joint training by receiving the reference signal based on the second configuration information.

In some embodiments, the second configuration information may be transmitted through, but not limited to, at least one of the following signaling: DCI, an RRC message, or an MAC CE.

In some embodiments, the method 200 further includes the following. The terminal device transmits second indication information to the network device. The second indication information indicates that the terminal device is to perform joint training on the first model and the second model. Alternatively, the second indication information is used to request to perform joint training on the first model and the second model.

For example, in the case where the terminal device determines to trigger joint training on the first model and the second model, the terminal device can indicate to the network device that joint training on the first model and the second model is to be triggered.

In some embodiments, the second indication information may be transmitted through uplink signaling. For example, the uplink signaling may include, but is not limited to, at least one of the following signaling: uplink control information (UCI), an RRC message, or a physical uplink shared channel (PUSCH).

In some embodiments, the second configuration information is transmitted by the network device in the case where the second indication information is received. For example, in the case where the terminal device determines to trigger joint training on the first model and the second model, the terminal device transmits the second indication information to the network device. Further, the network device can configure the second configuration information for the terminal device, so that the terminal device obtains the label channel data for joint training by receiving the reference signal based on the second configuration information.

In the case where the terminal device determines to perform joint training on the first model and the second model, the terminal device can obtain label data and a dataset for joint training. For example, the channel data (referred to as H1) obtained by receiving the reference signal based on the first configuration information is used as an input to the models, the channel data (referred to as H2) with high accuracy obtained by receiving the reference signal based on the second configuration information is used as label data of the models, and further, joint training is performed on the first model and the second model. For example, a loss function is applied to make an output of the second model as close to H2 as possible.

When the output of the second model and H2 have a higher correlation or similarity or have a smaller offset, it indicates that the joint training for the models achieves better effect. The model training for joint optimization is illustrated in FIG. 4.

It may be noted that, a specific representation form of the label channel data, i.e., H2, is not limited in embodiments of the disclosure. For example, the label channel data may be a channel itself, or may be a calculated channel feature, such as an eigenvector representing channel angle information and constructed through eigenvector decomposition.

In some embodiments, the terminal device can determine, according to whether one or more monitoring indicators satisfy a preset condition, whether to stop joint training on the first model and the second model.

In some embodiments, the method 200 further includes the following. The terminal device determines, according to second information, whether to stop joint training on the first model and the second model. The second information includes a similarity between output information of the second model and the label channel data.

For example, during the joint training on the models by the terminal device, the terminal device can determine, by determining performance indicators of the models, whether to stop joint training on the first model and the second model. Herein, the performance indicators of the models may include, but are not limited to, a similarity, a cosine similarity, a square of the cosine similarity, a mean square error, and a normalized mean square error between the label channel data and the output information of the second model.

In some embodiments, the method 200 further includes the following. The terminal device transmits third indication information to the network device. The third indication information indicates that joint training on the first model and the second model is to be stopped. Alternatively, the third indication information is used to request to stop joint training on the first model and the second model.

For example, in the case where the terminal device determines to stop joint training on the first model and the second model, the terminal device transmits the third indication information to the network device.

Optionally, the third indication information is transmitted through at least one of the following signaling: UCI, an RRC message, or a PUSCH.

In some embodiments, the method 200 further includes the following. The terminal device transmits a decoder model in an updated second model to the network device.

For example, after the terminal device completes joint training on the first model and the second model, the terminal device can transmit a decoder model in a trained second model to the network device. Further, the network device can use the updated decoder model to recover a target bitstream fed back by the terminal device.

In some embodiments, when a wireless communication environment changes, if the current first model and second model are no longer applicable to the current environment, the terminal device may re-trigger joint training on the first model and the second model, or may return to CSI estimation and feedback based on a conventional scheme, or may return to initial models (or basic models) of the first model and the second model.

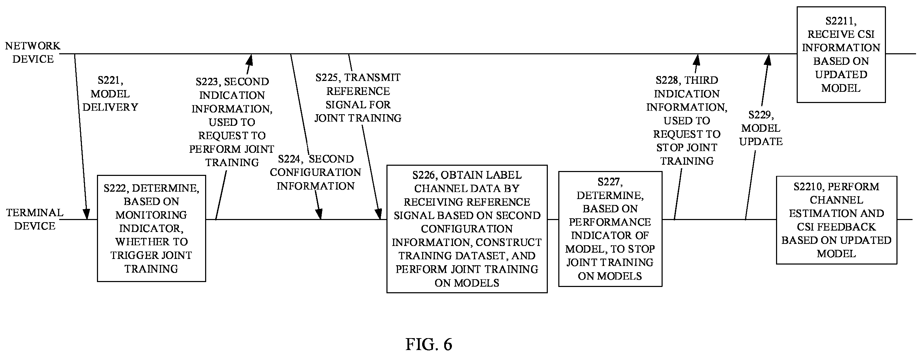

An execution flow of joint training on models by a terminal device according to a specific embodiment of the disclosure will be described below with reference to FIG. 6. As illustrated in FIG. 6, the execution flow may include the following.

S221, a network device delivers to a terminal device a model, for example, a decoder model in a second model.

S222, the terminal device determines, based on a monitoring indicator, whether to trigger joint training on a first model and the second model.

For a specific determining manner, reference can be made to related descriptions in the foregoing embodiments.

S223, the terminal device transmits second indication information to the network device. The second indication information is used to request to perform joint training on the first model and the second model, or indicates that the terminal device is to perform joint training on the first model and the second model.

S224, the terminal device receives second configuration information from the network device. The second configuration information is used to configure a reference signal for joint training.

S225, the network device transmits the reference signal for joint training.

S226, the terminal device obtains label channel data by receiving the reference signal based on the second configuration information, and obtains channel data for model input by receiving the reference signal according to first configuration information. The channel data for model input corresponds to the above first input information.

Further, joint training is performed on the first model and the second model based on the first input information and the label channel data.

S227, the terminal device determines, based on a performance indicator of the model, whether to stop joint training on the first model and the second model. For the specific implementations, reference can be made to related descriptions in the foregoing embodiments.

S228, the terminal device transmits third indication information to the network device. The third indication information is used to request to stop joint training on the first model and the second model, or indicates that joint training on the first model and the second model is to be stopped.

For example, in the case where the terminal device determines to stop joint training on the first model and the second model, the terminal device transmits the third indication information.

S229, the terminal device transmits an updated model to the network device.

For example, a decoder model in an updated second model is transmitted to the network device.

S2210, the terminal device performs channel estimation based on an updated first model, and performs CSI feedback according to an encoder model in the second model.

S2211, the network device recovers CSI feedback of the terminal device based on the updated decoder model.

As above mentioned, in embodiments of the disclosure, the terminal device can perform joint training on a CSI estimation model and a CSI feedback model, so that better adaptation between a channel estimation model and the CSI feedback model can be ensured, thereby improving the overall model performance. Further, CSI feedback based on trained models can improve the CSI feedback performance, thereby improving the signal transmission performance.

It may be understood that, the model training method in the method 200 may also be applicable to training of the second model. In this case, during model obtaining, the network device needs to obtain only the second model. An input to the second model may be channel data obtained based on a conventional channel estimation scheme, and the label channel data may be the label channel data in the method 200. In this case, the second model can be better adapted to an error caused by the conventional channel estimation method, so as to reduce influences brought by error propagation, thereby improving the final CSI feedback effect. During the model update, the terminal device can transmit the updated decoder model to the network device.

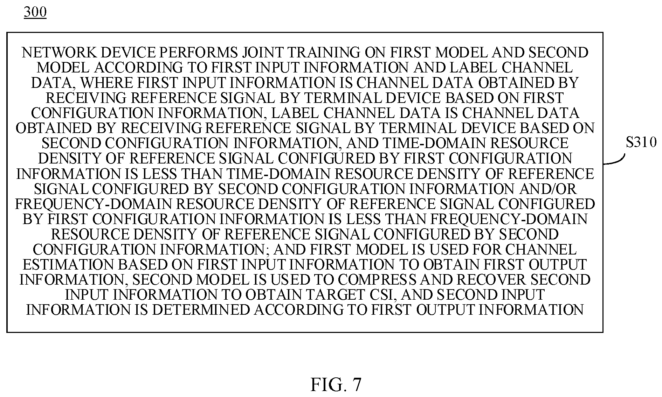

FIG. 7 is another schematic diagram of a wireless communication method 300 according to embodiments of the disclosure. As illustrated in FIG. 7, the method 300 includes the following.

S310, a network device performs joint training on a first model and a second model according to first input information and label channel data. The first input information is channel data obtained by receiving a reference signal by a terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In some embodiments, the second model includes an encoder model and a decoder model. The encoder model is used to compress the second input information to obtain a target bitstream, and the decoder model is used to recover the target bitstream to obtain the target CSI.

In the method 300, for the specific implementations of the first input information, the label channel data, the first configuration information, the second configuration information, the first model, and the second model, reference can be made to related descriptions of the first input information, the label channel data, the first configuration information, the second configuration information, the first model, and the second model in the method 200, which will not be repeated herein for the sake of brevity.

In some embodiments, the method 300 further includes the following. The network device obtains the first model and the second model.

It may be noted that, a manner for obtaining the first model and the second model by the network device is not limited in the disclosure. Optionally, the first model and the second model may be obtained in the same manner, or may be obtained in different manners. The encoder model and the decoder model in the second model may be obtained in the same manner, or may be obtained in different manners.

In some embodiments, the first model is pre-defined, for example, by a device manufacturer.

In some embodiments, the first model is obtained from a third-party device, for example, through a third-party channel or protocol.

In some embodiments, the first model is obtained from the terminal device, for example, transmitted by the terminal device through uplink signaling. For example, the uplink signaling may include, but is not limited to, an RRC message, UCI, and a PUSCH.

In some embodiments, the second model is pre-defined, for example, by a device manufacturer.

In some embodiments, the second model is obtained from a third-party device, for example, through a third-party channel or protocol.

In some embodiments, the second model is obtained from the terminal device, for example, transmitted by the terminal device through uplink signaling. For example, the uplink signaling may include, but is not limited to, an RRC message, UCI, and a PUSCH.

In some embodiments of the disclosure, joint training on the first model and the second model by the network device may be determined by the network device itself. For example, the network device can determine, according to whether one or more monitoring indicators satisfy a preset condition, whether to trigger joint training on the first model and the second model.

In some embodiments, the method 300 further includes the following. The network device determines, according to third information, whether to perform joint training on the first model and the second model. The third information includes at least one of: channel quality information of an environment where the network device is located; or a data transmission status in a recent period of time.

For the specific implementation of determining by the network device whether to trigger joint training on the first model and the second model, reference can be made to related descriptions in the method 200, which will not be repeated herein for the sake of brevity.

In some embodiments, the method 300 further includes the following. The network device transmits fourth indication information to the terminal device. The fourth indication information indicates that the network device is to perform joint training on the first model and the second model.

In some embodiments, the fourth indication information is transmitted through, but not limited to, at least one of the following signaling: DCI, an RRC message, or an MAC CE.

In some embodiments, in the case where the network device determines to trigger joint training on the first model and the second model, the network device can transmit the second configuration information to the terminal device. Optionally, the fourth indication information and the second configuration information may be transmitted through the same signaling, or may be transmitted through different signaling. For example, in the case where the network device determines to trigger joint training on the first model and the second model, the network device configures the second configuration information for the terminal device.

In some other embodiments of the disclosure, joint training on the first model and the second model by the network device may be triggered by the terminal device. For example, the network device receives fifth indication information from the terminal device, where the fifth indication information indicates the network device to perform joint training on the first model and the second model, or is used to request the network device to perform joint training on the first model and the second model.

In some embodiments, the terminal device can determine, according to whether one or more monitoring indicators satisfy a preset condition, whether to trigger joint training on the first model and the second model. For the specific implementation of determining by the terminal device whether to trigger joint training on the first model and the second model, reference can be made to related descriptions in the method 200, which will not be repeated herein for the sake of brevity.

In some embodiments, the second configuration information is transmitted by the network device in the case where the fifth indication information is received from the terminal device.

In some embodiments, the method 300 further includes the following. The network device obtains the first input information and the label channel data from the terminal device.

For example, in the case where the fifth indication information is received from the terminal device, the network device obtains the first input information and the label channel data from the terminal device.

For another example, in the case where the network device determines to trigger joint training on the first model and the second model, the network device obtains the first input information and the label channel data from the terminal device.

In some embodiments, the method 300 further includes the following. The network device determines, according to fourth information, whether to stop joint training on the first model and the second model. The fourth information includes a similarity between output information of the second model and the label channel data.

For the specific implementation of determining by the network device whether to stop joint training on the first model and the second model, reference can be made to related descriptions of determining by the terminal device whether to stop joint training on the first model and the second model in the method 200, which will not be repeated herein for the sake of brevity.

In some embodiments, the method 300 further includes the following. The network device transmits sixth indication information to the terminal device. The sixth indication information indicates that joint training on the first model and the second model is to be stopped.

For example, in the case where the network device determines to stop joint training on the first model and the second model, the network device transmits the sixth indication information to the terminal device.

In some embodiments, the method 300 further includes the following. The network device transmits an encoder model in an updated second model and an updated first model to the terminal device.

For example, after the network device completes joint training on the first model and the second model, the network device can transmit a trained first model and an encoder model in a trained second model to the terminal device. Further, the terminal device can perform channel estimation based on the trained first model and perform CSI feedback based on the trained encoder model, for example, transmitting a target bitstream. The network device can use the trained decoder model to recover a target bitstream fed back by the terminal device.

In some embodiments, when a wireless communication environment changes, if the current first model and second model are no longer applicable to the current environment, the network device may re-trigger joint training on the first model and the second model, or may return to CSI estimation and feedback based on a conventional scheme, or may return to initial models (or basic models) of the first model and the second model.

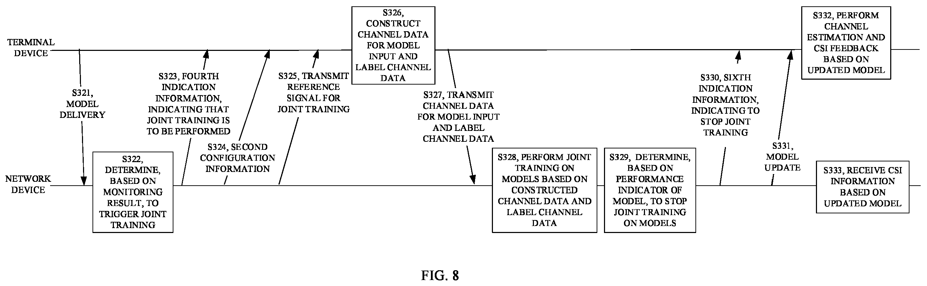

An execution flow of joint training on models by a network device according to a specific embodiment of the disclosure will be described below with reference to FIG. 8. As illustrated in FIG. 8, the execution flow may include the following.

S321, a terminal device delivers to a network device a model, for example, a first model and an encoder model in a second model.

S322, the network device determines, based on a monitoring indicator, whether to trigger joint training on the first model and the second model.

For a specific determining manner, reference can be made to related descriptions in the foregoing embodiments.

S323, the network device transmits fourth indication information to the terminal device. The fourth indication information indicates that joint training is to be performed on the first model and the second model.

S324, the network device transmits second configuration information to the terminal device. The second configuration information is used to configure a reference signal for joint training.

S325, the network device transmits the reference signal for joint training.

S326, the terminal device obtains label channel data by receiving the reference signal based on the second configuration information, and obtains channel data for model input by receiving the reference signal according to first configuration information. The channel data for model input corresponds to the above first input information.

S327, the terminal device transmits the channel data for model input and the label channel data to the network device.

S328, the network device performs joint training on the first model and the second model based on the channel data for model input and the label channel data.

S329, the network device determines, based on a performance indicator of the model, whether to stop joint training on the first model and the second model. For the specific implementations, reference can be made to related descriptions in the foregoing embodiments.

S330, the network device transmits sixth indication information to the terminal device. The sixth indication information indicates to stop joint training on the first model and the second model.

For example, in the case where the network device determines to stop joint training on the first model and the second model, the network device transmits the sixth indication information.

S331, the network device transmits an updated model to the terminal device.

For example, an encoder model in an updated second model and an updated first model are transmitted to the terminal device.

S332, the terminal device performs channel estimation based on the updated first model, and performs CSI feedback based on the encoder model in the updated second model.

S333, the network device recovers CSI feedback of the terminal device based on the updated decoder model.

As above mentioned, in embodiments of the disclosure, the network device can perform joint training on a CSI estimation model and a CSI feedback model, so that better adaptation between a channel estimation model and the CSI feedback model can be ensured, thereby improving the overall model performance. Further, CSI feedback based on trained models can improve the CSI feedback performance, thereby improving the signal transmission performance.

It may be understood that, the model training method in the method 300 may also be applicable to training of the second model. In this case, during model obtaining, the network device needs to obtain only the second model. An input to the second model may be channel data obtained based on a conventional channel estimation scheme, and the label channel data may be the label channel data in the method 300. In this case, the second model can be better adapted to an error caused by the conventional channel estimation method, so as to reduce influences brought by error propagation, thereby improving the final CSI feedback effect. During the model update, the network device can transmit the updated encoder model to the terminal device.

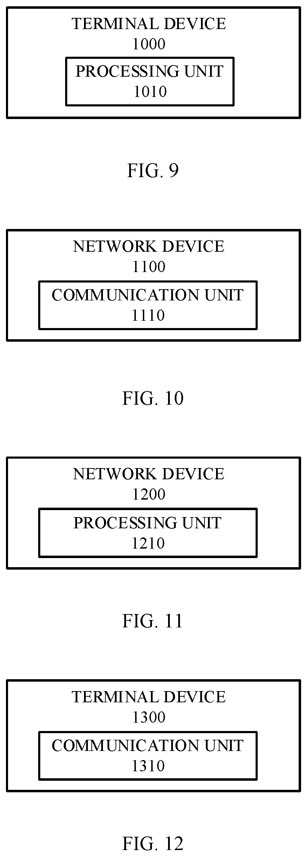

The method embodiments of the disclosure are described in detail above with reference to FIG. 5 to FIG. 8, and apparatus embodiments of the disclosure will be described in detail below with reference to FIG. 9 to FIG. 15. It may be understood that the apparatus embodiments and the method embodiments correspond to each other, and for similar descriptions, reference can be made to the method embodiments.

FIG. 9 is a schematic block diagram of a terminal device 1000 according to embodiments of the disclosure. As illustrated in FIG. 9, the terminal device 1000 includes a processing unit 1010. The processing unit 1010 is configured to perform joint training on a first model and a second model according to first input information and label channel data. The first input information is channel data obtained by receiving a reference signal by the terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In some embodiments, the second model includes an encoder model and a decoder model. The encoder model is used to compress the second input information to obtain a target bitstream, and the decoder model is used to recover the target bitstream to obtain the target CSI.

In some embodiments, the processing unit 1010 is further configured to obtain the first model and the second model.

In some embodiments, the first model is obtained from a network device. Alternatively, the first model is pre-defined. Alternatively, the first model is obtained from a third-party device.

In some embodiments, the second model is obtained from a network device. Alternatively, the second model is pre-defined. Alternatively, the second model is obtained from a third-party device.

In some embodiments, the terminal device 1000 further includes a communication unit. The communication unit is configured to receive first indication information from a network device. The first indication information indicates the terminal device to perform joint training on the first model and the second model.

In some embodiments, the first indication information is transmitted through at least one of the following signaling: DCI, an RRC message, or an MAC CE.

In some embodiments, the processing unit 1010 is further configured to determine, according to first information, whether to perform joint training on the first model and the second model. The first information includes at least one of: channel quality information of an environment where the terminal device is located; a data transmission status in a recent period of time; CSI feedback performance of the second model; or mobility information of the terminal device.

In some embodiments, the data transmission status in the recent period of time includes a success rate of data packet reception in the recent period of time.

In some embodiments, the CSI feedback performance of the second model includes a similarity between input information and output information of the second model.

In some embodiments, the terminal device 1000 further includes a communication unit. The communication unit is configured to transmit second indication information to a network device. The second indication information indicates that the terminal device is to perform joint training on the first model and the second model.

In some embodiments, the second indication information is transmitted through at least one of the following signaling: UCI, an RRC message, or a PUSCH.

In some embodiments, the second configuration information is transmitted by the network device in the case where the second indication information is received.

In some embodiments, the processing unit 1010 is further configured to determine, according to second information, whether to stop joint training on the first model and the second model. The second information includes a similarity between output information of the second model and the label channel data.

In some embodiments, the terminal device further includes a communication unit. The communication unit is configured to transmit third indication information to a network device. The third indication information indicates that joint training on the first model and the second model is to be stopped.

In some embodiments, the third indication information is transmitted through at least one of the following signaling: UCI, an RRC message, or a PUSCH.

In some embodiments, the terminal device further includes a communication unit. The communication unit is configured to transmit a decoder model in an updated second model to a network device.

Optionally, in some embodiments, the communication unit above may be a communication interface or a transceiver, or may be an input/output interface of a communication chip or a system-on-chip (SOC). The processing unit above may be one or more processors.

It may be understood that, the terminal device 400 according to embodiments of the disclosure may correspond to the terminal device in the method embodiments of the disclosure, and the foregoing and other operations and/or functions of various units in the terminal device 400 are respectively intended for implementing corresponding procedures of the terminal device in the method 200 illustrated in FIG. 5 to FIG. 6, which will not be repeated herein for the sake of brevity.

FIG. 10 is a schematic block diagram of a network device according to embodiments of the disclosure. The network device 1100 in FIG. 10 includes a communication unit 1110. The communication unit 1110 is configured to transmit first configuration information and second configuration information to a terminal device. A time-domain resource density of a reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information.

In some embodiments, the first configuration information is used for the terminal device to receive the reference signal to obtain first input information, the second configuration information is used for the terminal device to receive the reference signal to obtain label channel data, and the first input information and the label channel data are used for joint training on a first model and a second model. The first model is used for channel estimation based on the first input information to obtain first output information, the second model is used to compress and recover second input information to obtain target CSI, and the second input information is determined according to the first output information.

In some embodiments, the network device 1100 further includes a processing unit. The processing unit is configured to determine, according to third information, whether to perform joint training on the first model and the second model. The third information includes at least one of: channel quality information of an environment where the network device is located; or a data transmission status in a recent period of time.

In some embodiments, the communication unit 1110 is further configured to transmit first indication information to the terminal device. The first indication information indicates the terminal device to perform joint training on the first model and the second model.

In some embodiments, the first indication information is transmitted through at least one of the following signaling: DCI, an RRC message, or an MAC CE.

In some embodiments, the communication unit 1110 is further configured to receive second indication information from the terminal device. The second indication information indicates that the terminal device is to perform joint training on the first model and the second model.

In some embodiments, the second indication information is transmitted through at least one of the following signaling: UCI, an RRC message, or a PUSCH.

In some embodiments, the second configuration information is transmitted by the network device in the case where the second indication information is received.

In some embodiments, the communication unit 1110 is further configured to receive third indication information from the terminal device. The third indication information indicates that joint training on the first model and the second model is to be stopped.

In some embodiments, the third indication information is transmitted through at least one of the following signaling: UCI, an RRC message, or a PUSCH.

In some embodiments, the communication unit 1110 is further configured to receive a decoder model in an updated second model from the terminal device.

Optionally, in some embodiments, the communication unit above may be a communication interface or a transceiver, or may be an input/output interface of a communication chip or an SOC. The processing unit above may be one or more processors.

It may be understood that, the network device 1100 according to embodiments of the disclosure may correspond to the network device in the method embodiments of the disclosure, and the foregoing and other operations and/or functions of various units in the network device 1100 are respectively intended for implementing corresponding procedures of the network device in the method 200 illustrated in FIG. 5 to FIG. 6, which will not be repeated herein for the sake of brevity.

FIG. 11 is a schematic block diagram of a network device according to embodiments of the disclosure. The network device 1200 in FIG. 11 includes a processing unit 1210. The processing unit 1210 is configured to perform joint training on a first model and a second model according to first input information and label channel data. The first input information is channel data obtained by receiving a reference signal by a terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In some embodiments, the second model includes an encoder model and a decoder model. The encoder model is used to compress the second input information to obtain a target bitstream, and the decoder model is used to recover the target bitstream to obtain the target CSI.

In some embodiments, the processing unit 1210 is further configured to obtain the first model and the second model.

In some embodiments, the first model is obtained from the terminal device. Alternatively, the first model is pre-defined. Alternatively, the first model is obtained from a third-party device.

In some embodiments, the second model is obtained from the terminal device. Alternatively, the second model is pre-defined. Alternatively, the second model is obtained from a third-party device.

In some embodiments, the processing unit 1210 is further configured to determine, according to third information, whether to perform joint training on the first model and the second model. The third information includes at least one of: channel quality information of an environment where the network device is located; or a data transmission status in a recent period of time.

In some embodiments, the data transmission status in the recent period of time includes an HARQ state of the terminal device.

In some embodiments, the network device 1200 further includes a communication unit. The communication unit is configured to transmit fourth indication information to the terminal device. The fourth indication information indicates that the network device is to perform joint training on the first model and the second model.

In some embodiments, the fourth indication information is transmitted through at least one of the following signaling: DCI, an RRC message, or an MAC CE.

In some embodiments, the network device 1200 further includes a communication unit. The communication unit is configured to receive fifth indication information from the terminal device. The fifth indication information indicates the network device to perform joint training on the first model and the second model.

In some embodiments, the network device 1200 further includes a communication unit. The communication unit is configured to transmit the second configuration information to the terminal device.

In some embodiments, the processing unit 1210 is further configured to obtain the first input information and the label channel data from the terminal device.

In some embodiments, the processing unit 1210 is further configured to determine, according to fourth information, whether to stop joint training on the first model and the second model. The fourth information includes a similarity between output information of the second model and the label channel data.

In some embodiments, the network device 1200 further includes a communication unit. The communication unit is configured to transmit sixth indication information to the terminal device. The sixth indication information indicates that joint training on the first model and the second model is to be stopped.

In some embodiments, the network device 1200 further includes a communication unit. The communication unit is configured to transmit an encoder model in an updated second model and an updated first model to the terminal device.

Optionally, in some embodiments, the communication unit above may be a communication interface or a transceiver, or may be an input/output interface of a communication chip or an SOC. The processing unit above may be one or more processors.

It may be understood that, the network device 1200 according to embodiments of the disclosure may correspond to the network device in the method embodiments of the disclosure, and the foregoing and other operations and/or functions of various units in the network device 500 are respectively intended for implementing corresponding procedures of the network device in the method 300 illustrated in FIG. 7 to FIG. 8, which will not be repeated herein for the sake of brevity.

FIG. 12 is a schematic block diagram of a terminal device 1300 according to embodiments of the disclosure. As illustrated in FIG. 12, the terminal device 1300 includes a communication unit 1310. The communication unit 1310 is configured to transmit first input information and label channel data to a network device. The first input information and the label channel data are used for joint training on a first model and a second model. The first input information is channel data obtained by receiving a reference signal by the terminal device based on first configuration information. The label channel data is channel data obtained by receiving the reference signal by the terminal device based on second configuration information. A time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information. The first model is used for channel estimation based on the first input information to obtain first output information. The second model is used to compress and recover second input information to obtain target CSI. The second input information is determined according to the first output information.

In some embodiments, the second model includes an encoder model and a decoder model. The encoder model is used to compress the second input information to obtain a target bitstream, and the decoder model is used to recover the target bitstream to obtain the target CSI.

In some embodiments, the terminal device 1300 further includes a processing unit. The processing unit is configured to determine, according to first information, whether to perform joint training on the first model and the second model. The first information includes at least one of: channel quality information of an environment where the terminal device is located; a data transmission status in a recent period of time; CSI feedback performance of the second model; or mobility information of the terminal device.

In some embodiments, the communication unit 1310 is further configured to transmit fifth indication information to the network device. The fifth indication information indicates the network device to perform joint training on the first model and the second model.

In some embodiments, the communication unit 1310 is further configured to receive fourth indication information from the network device. The fourth indication information indicates that the network device is to perform joint training on the first model and the second model.

In some embodiments, the fourth indication information is transmitted through at least one of the following signaling: DCI, an RRC message, or an MAC CE.

In some embodiments, the communication unit 1310 is further configured to receive the second configuration information from the network device.

In some embodiments, the communication unit 1310 is further configured to receive sixth indication information from the network device. The sixth indication information indicates that joint training on the first model and the second model is to be stopped.

In some embodiments, the communication unit 1310 is further configured to receive an encoder model in an updated second model and an updated first model from the network device.

Optionally, in some embodiments, the communication unit above may be a communication interface or a transceiver, or may be an input/output interface of a communication chip or an SOC. The processing unit above may be one or more processors.

It may be understood that, the terminal device 1300 according to embodiments of the disclosure may correspond to the terminal device in the method embodiments of the disclosure, and the foregoing and other operations and/or functions of various units in the terminal device 1300 are respectively intended for implementing corresponding procedures of the terminal device in the method 300 illustrated in FIG. 7 to FIG. 8, which will not be repeated herein for the sake of brevity.

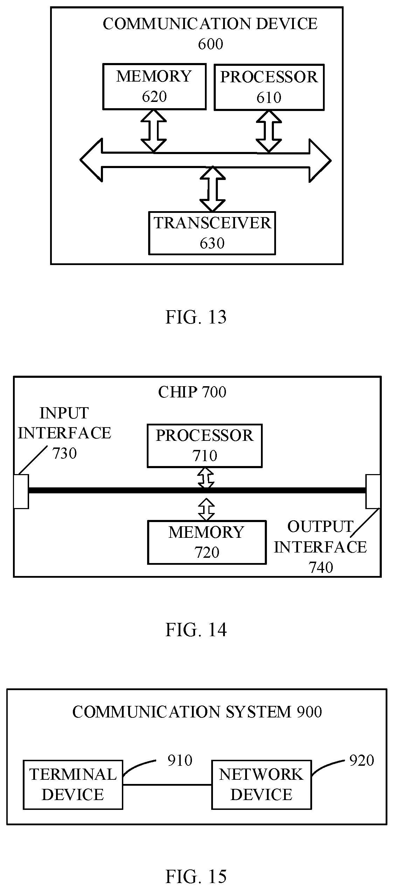

FIG. 13 is a schematic structural diagram of a communication device 600 provided in embodiments of the disclosure. The communication device 600 illustrated in FIG. 13 includes a processor 610. The processor 610 can invoke and execute a computer program stored in a memory, so as to implement the method in embodiments of the disclosure.

Optionally, as illustrated in FIG. 13, the communication device 600 may further include a memory 620. The processor 610 can invoke and execute a computer program stored in the memory 620, so as to implement the method in embodiments of the disclosure.

The memory 620 may be a separate device independent of the processor 610, or may be integrated into the processor 610.

Optionally, as illustrated in FIG. 13, the communication device 600 may further include a transceiver 630. The processor 610 can control the transceiver 630 to communicate with other devices, specifically, to transmit information or data to other devices or to receive information or data from other devices.

The transceiver 630 may include a transmitter and a receiver. The transceiver 630 may further include an antenna, where one or more antennas may be provided.

Optionally, the communication device 600 may specifically be the network device in embodiments of the disclosure, and the communication device 600 may implement corresponding operations implemented by the network device in various methods in embodiments of the disclosure, which will not be repeated herein for the sake of brevity.

Optionally, the communication device 600 may specifically be the mobile terminal/terminal device in embodiments of the disclosure, and the communication device 600 may implement corresponding operations implemented by the mobile terminal/terminal device in various methods in embodiments of the disclosure, which will not be repeated herein for the sake of brevity.

FIG. 14 is a schematic structural diagram of a chip according to embodiments of the disclosure. The chip 700 illustrated in FIG. 14 includes a processor 710. The processor 710 can invoke and execute a computer program stored in a memory, so as to implement the method in embodiments of the disclosure.

Optionally, as illustrated in FIG. 14, the chip 700 may further include a memory 720. The processor 710 can invoke and execute a computer program stored in the memory 720, so as to implement the method in embodiments of the disclosure.

The memory 720 may be a separate device independent of the processor 710, or may be integrated into the processor 710.

Optionally, the chip 700 may further include an input interface 730. The processor 710 can control the input interface 730 to communicate with other devices or chips, and specifically, to obtain information or data transmitted by other devices or chips.

Optionally, the chip 700 may further include an output interface 740. The processor 710 can control the output interface 740 to communicate with other devices or chips, and specifically, to output information or data to other devices or chips.

Optionally, the chip may be applied to the network device in embodiments of the disclosure, and the chip may implement corresponding operations implemented by the network device in various methods in embodiments of the disclosure, which will not be repeated herein for the sake of brevity.

Optionally, the chip may be applied to the mobile terminal/terminal device in embodiments of the disclosure, and the chip may implement corresponding operations implemented by the mobile terminal/terminal device in various methods in embodiments of the disclosure, which will not be repeated herein for the sake of brevity.

It may be understood that, the chip mentioned in embodiments of the disclosure may also be referred to as an SOC.

FIG. 15 is a schematic block diagram of a communication system 900 provided in embodiments of the disclosure. As illustrated in FIG. 15, the communication system 900 includes a terminal device 910 and a network device 920.

The terminal device 910 may be configured to implement corresponding functions implemented by the terminal device in the foregoing methods, and the network device 920 may be configured to implement corresponding functions implemented by the network device in the foregoing methods, which will not be repeated herein for the sake of brevity.

It may be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a generalpurpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The generalpurpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium mature in the skill such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method described above with the hardware of the processor.

It may be understood that, the memory in embodiments of the disclosure may be a volatile memory or a non-volatile memory, or may include both the volatile memory and the non-volatile memory. The non-volatile memory may be an ROM, a PROM, an erasable PROM (EPROM), an electrically EPROM (EEPROM), or a flash memory. The volatile memory may be an RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the disclosure is intended to include, but is not limited to, these and any other suitable types of memory.

It may be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

A computer-readable storage medium is further provided in embodiments of the disclosure. The computer-readable storage medium is configured to store a computer program.

Optionally, the computer-readable storage medium may be applied to the network device in embodiments of the disclosure, and the computer program causes a computer to execute corresponding operations implemented by the network device in various methods in embodiments of the disclosure, which will not be repeated herein for the sake of brevity.

Optionally, the computer-readable storage medium may be applied to the mobile terminal/terminal device in embodiments of the disclosure, and the computer program causes a computer to execute corresponding operations implemented by the mobile terminal/terminal device in various methods in embodiments of the disclosure, which will not be repeated herein for the sake of brevity.

A computer program product is further provided in embodiments of the disclosure. The computer program product includes computer program instructions.

Optionally, the computer program product may be applied to the network device in embodiments of the disclosure, and the computer program instructions cause a computer to execute corresponding operations implemented by the network device in various methods in embodiments of the disclosure, which will not be repeated herein for the sake of brevity.

Optionally, the computer program product may be applied to the mobile terminal/terminal device in embodiments of the disclosure, and the computer program instructions cause a computer to execute corresponding operations implemented by the mobile terminal/terminal device in various methods in embodiments of the disclosure, which will not be repeated herein for the sake of brevity.

A computer program is further provided in embodiments of the disclosure.

Optionally, the computer program may be applied to the network device in embodiments of the disclosure. The computer program, when executed by a computer, causes the computer to implement corresponding operations implemented by the network device in various methods in embodiments of the disclosure, which will not be repeated herein for the sake of brevity.

Optionally, the computer program may be applied to the mobile terminal/terminal device in embodiments of the disclosure. The computer program, when executed by a computer, causes the computer to implement corresponding operations implemented by the mobile terminal/terminal device in various methods in embodiments of the disclosure, which will not be repeated herein for the sake of brevity.

It will be appreciated by those of ordinary skill in the art that units and algorithmic operations of various examples described in connection with embodiments of the disclosure can be implemented by electronic hardware or by a combination of computer software and electronic hardware. Whether these functions are performed by means of hardware or software depends on the application and the design constraints of the technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, an ROM, an RAM, a magnetic disk, or an optical disk.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
performing, by a terminal device according to first input information and label channel data, joint training on a first model and a second model, wherein
the first input information is channel data obtained by receiving a reference signal by the terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

2. The method of claim 1, wherein the second model comprises an encoder model and a decoder model, the encoder model is used to compress the second input information to obtain a target bitstream, and the decoder model is used to recover the target bitstream to obtain the target CSI.

3. The method of claim 1 or 2, further comprising:
obtaining, by the terminal device, the first model and the second model.

4. The method of claim 3, wherein the first model is obtained from a network device, or the first model is pre-defined, or the first model is obtained from a third-party device.

5. The method of claim 3 or 4, wherein the second model is obtained from a network device, or the second model is pre-defined, or the second model is obtained from a third-party device.

6. The method of any one of claims 1 to 5, further comprising:
receiving, by the terminal device, first indication information from a network device, wherein the first indication information indicates the terminal device to perform joint training on the first model and the second model.

7. The method of claim 6, wherein the first indication information is transmitted through at least one of the following signaling: downlink control information (DCI), a radio resource control (RRC) message, or a media access control control-element (MAC CE).

8. The method of any one of claims 1 to 5, further comprising:
determining, by the terminal device according to first information, whether to perform joint training on the first model and the second model, wherein the first information comprises at least one of:
channel quality information of an environment where the terminal device is located;
a data transmission status in a recent period of time;
CSI feedback performance of the second model; or
mobility information of the terminal device.

9. The method of claim 8, wherein the data transmission status in the recent period of time comprises:
a success rate of data packet reception in the recent period of time.

10. The method of claim 8 or 9, wherein the CSI feedback performance of the second model comprises:
a similarity between input information and output information of the second model.

11. The method of any one of claims 1 to 10, further comprising:
transmitting, by the terminal device, second indication information to a network device, wherein the second indication information indicates that the terminal device is to perform joint training on the first model and the second model.

12. The method of claim 11, wherein the second indication information is transmitted through at least one of the following signaling: uplink control information (UCI), an RRC message, or a physical uplink shared channel (PUSCH).

13. The method of claim 11 or 12, wherein the second configuration information is transmitted by the network device in a case where the second indication information is received.

14. The method of any one of claims 1 to 13, further comprising:
determining, by the terminal device according to second information, whether to stop joint training on the first model and the second model, wherein
the second information comprises a similarity between output information of the second model and the label channel data.

15. The method of any one of claims 1 to 14, further comprising:
transmitting, by the terminal device, third indication information to a network device, wherein the third indication information indicates that joint training on the first model and the second model is to be stopped.

16. The method of claim 15, wherein the third indication information is transmitted through at least one of the following signaling: UCI, an RRC message, or a PUSCH.

17. The method of any one of claims 1 to 15, further comprising:
transmitting, by the terminal device, a decoder model in an updated second model to a network device.

18. A wireless communication method, comprising:
transmitting, by a network device, first configuration information and second configuration information to a terminal device, wherein a time-domain resource density of a reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information.

19. The method of claim 18, wherein the first configuration information is used for the terminal device to receive the reference signal to obtain first input information, the second configuration information is used for the terminal device to receive the reference signal to obtain label channel data, and the first input information and the label channel data are used for joint training on a first model and a second model; and
the first model is used for channel estimation based on the first input information to obtain first output information, the second model is used to compress and recover second input information to obtain target channel state information (CSI), and the second input information is determined according to the first output information.

20. The method of claim 19, further comprising:
determining, by the network device according to third information, whether to perform joint training on the first model and the second model, wherein the third information comprises at least one of:
channel quality information of an environment where the network device is located; or
a data transmission status in a recent period of time.

21. The method of claim 19 or 20, further comprising:
transmitting, by the network device, first indication information to the terminal device, wherein the first indication information indicates the terminal device to perform joint training on the first model and the second model.

22. The method of claim 21, wherein the first indication information is transmitted through at least one of the following signaling: downlink control information (DCI), a radio resource control (RRC) message, or a media access control control-element (MAC CE).

23. The method of claim 19, further comprising:
receiving, by the network device, second indication information from the terminal device, wherein the second indication information indicates that the terminal device is to perform joint training on the first model and the second model.

24. The method of claim 23, wherein the second indication information is transmitted through at least one of the following signaling: uplink control information (UCI), an RRC message, or a physical uplink shared channel (PUSCH).

25. The method of claim 23 or 24, wherein the second configuration information is transmitted by the network device in a case where the second indication information is received.

26. The method of any one of claims 19 to 25, further comprising:
receiving, by the network device, third indication information from the terminal device, wherein the third indication information indicates that joint training on the first model and the second model is to be stopped.

27. The method of claim 26, wherein the third indication information is transmitted through at least one of the following signaling: UCI, an RRC message, or a PUSCH.

28. The method of any one of claims 19 to 27, further comprising:
receiving, by the network device, a decoder model in an updated second model from the terminal device.

29. A wireless communication method, comprising:
performing, by a network device according to first input information and label channel data, joint training on a first model and a second model, wherein
the first input information is channel data obtained by receiving a reference signal by a terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

30. The method of claim 29, wherein the second model comprises an encoder model and a decoder model, the encoder model is used to compress the second input information to obtain a target bitstream, and the decoder model is used to recover the target bitstream to obtain the target CSI.

31. The method of claim 29 or 30, further comprising:
obtaining, by the network device, the first model and the second model.

32. The method of claim 31, wherein the first model is obtained from the terminal device, or the first model is pre-defined, or the first model is obtained from a third-party device.

33. The method of claim 31, wherein the second model is obtained from the terminal device, or the second model is pre-defined, or the second model is obtained from a third-party device.

34. The method of any one of claims 29 to 33, further comprising:
determining, by the network device according to third information, whether to perform joint training on the first model and the second model, wherein the third information comprises at least one of:
channel quality information of an environment where the network device is located; or
a data transmission status in a recent period of time.

35. The method of claim 34, wherein the data transmission status in the recent period of time comprises:
a hybrid automatic repeat reQuest (HARQ) state of the terminal device.

36. The method of any one of claims 29 to 35, further comprising:
transmitting, by the network device, fourth indication information to the terminal device, wherein the fourth indication information indicates that the network device is to perform joint training on the first model and the second model.

37. The method of claim 36, wherein the fourth indication information is transmitted through at least one of the following signaling: downlink control information (DCI), a radio resource control (RRC) message, or a media access control control-element (MAC CE).

38. The method of any one of claims 29 to 32, further comprising:
receiving, by the network device, fifth indication information from the terminal device, wherein the fifth indication information indicates the network device to perform joint training on the first model and the second model.

39. The method of any one of claims 29 to 38, further comprising:
transmitting, by the network device, the second configuration information to the terminal device.

40. The method of any one of claims 29 to 39, further comprising:
obtaining, by the network device, the first input information and the label channel data from the terminal device.

41. The method of any one of claims 29 to 40, further comprising:
determining, by the network device according to fourth information, whether to stop joint training on the first model and the second model, wherein
the fourth information comprises a similarity between output information of the second model and the label channel data.

42. The method of any one of claims 29 to 41, further comprising:
transmitting, by the network device, sixth indication information to the terminal device, wherein the sixth indication information indicates that joint training on the first model and the second model is to be stopped.

43. The method of any one of claims 29 to 42, further comprising:
transmitting, by the network device, an encoder model in an updated second model and an updated first model to the terminal device.

44. A wireless communication method, comprising:
transmitting, by a terminal device, first input information and label channel data to a network device, wherein the first input information and the label channel data are used for joint training on a first model and a second model; wherein
the first input information is channel data obtained by receiving a reference signal by the terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

45. The method of claim 44, wherein the second model comprises an encoder model and a decoder model, the encoder model is used to compress the second input information to obtain a target bitstream, and the decoder model is used to recover the target bitstream to obtain the target CSI.

46. The method of claim 44 or 45, further comprising:
determining, by the terminal device according to first information, whether to perform joint training on the first model and the second model, wherein the first information comprises at least one of:
channel quality information of an environment where the terminal device is located;
a data transmission status in a recent period of time;
CSI feedback performance of the second model; or
mobility information of the terminal device.

47. The method of any one of claims 44 to 46, further comprising:
transmitting, by the terminal device, fifth indication information to the network device, wherein the fifth indication information indicates the network device to perform joint training on the first model and the second model.

48. The method of claim 44 or 45, further comprising:
receiving, by the terminal device, fourth indication information from the network device, wherein the fourth indication information indicates that the network device is to perform joint training on the first model and the second model.

49. The method of claim 48, wherein the fourth indication information is transmitted through at least one of the following signaling: downlink control information (DCI), a radio resource control (RRC) message, or a media access control control-element (MAC CE).

50. The method of any one of claims 44 to 49, further comprising:
receiving, by the terminal device, the second configuration information from the network device.

51. The method of any one of claims 44 to 50, further comprising:
receiving, by the terminal device, sixth indication information from the network device, wherein the sixth indication information indicates that joint training on the first model and the second model is to be stopped.

52. The method of any one of claims 44 to 51, further comprising:
receiving, by the terminal device, an encoder model in an updated second model and an updated first model from the network device.

53. A terminal device, comprising:
a processing unit configured to perform joint training on a first model and a second model according to first input information and label channel data, wherein
the first input information is channel data obtained by receiving a reference signal by the terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

54. A network device, comprising:
a communication unit configured to transmit first configuration information and second configuration information to a terminal device, wherein a time-domain resource density of a reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information.

55. A network device, comprising:
a processing unit configured to perform joint training on a first model and a second model according to first input information and label channel data, wherein
the first input information is channel data obtained by receiving a reference signal by a terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

56. A terminal device, comprising:
a communication unit configured to transmit first input information and label channel data to a network device, wherein the first input information and the label channel data are used for joint training on a first model and a second model;
the first input information is channel data obtained by receiving a reference signal by the terminal device based on first configuration information, the label channel data is channel data obtained by receiving the reference signal by the terminal device based on second configuration information, and a time-domain resource density of the reference signal configured by the first configuration information is less than a time-domain resource density of the reference signal configured by the second configuration information and/or a frequency-domain resource density of the reference signal configured by the first configuration information is less than a frequency-domain resource density of the reference signal configured by the second configuration information; and
the first model is used for channel estimation based on the first input information to obtain first output information, the second model is used to compress and recover second input information to obtain target channel state information (CSI), and the second input information is determined according to the first output information.

57. A terminal device, comprising a processor and a memory, wherein the memory is configured to store a computer program, and the processor is configured to invoke and execute the computer program stored in the memory, to perform the method of any one of claims 1 to 17 or the method of any one of claims 44 to 52.

58. A network device, comprising a processor and a memory, wherein the memory is configured to store a computer program, and the processor is configured to invoke and execute the computer program stored in the memory, to perform the method of any one of claims 18 to 28 or the method of any one of claims 29 to 43.

59. A chip, comprising a processor, wherein the processor is configured to invoke and execute a computer program stored in a memory, to cause a device equipped with the chip to perform the method of any one of claims 1 to 17, the method of any one of claims 18 to 28, the method of any one of claims 29 to 43, or the method of any one of claims 29 to 43.

60. A computer-readable storage medium configured to store a computer program which causes a computer to perform the method of any one of claims 1 to 17, the method of any one of claims 18 to 28, the method of any one of claims 29 to 43, or the method of any one of claims 29 to 43.

61. A computer program product comprising computer program instructions which cause a computer to perform the method of any one of claims 1 to 17, the method of any one of claims 18 to 28, the method of any one of claims 29 to 43, or the method of any one of claims 29 to 43.

62. A computer program causing a computer to perform the method of any one of claims 1 to 17, the method of any one of claims 18 to 28, the method of any one of claims 29 to 43, or the method of any one of claims 29 to 43.
